# EUROPEAN PATENT SPECIFICATION

(11) **EP 4 659 617 B1**
(45) Date of publication and mention of the grant of the patent: **28.10.2026**
(21) Application number: 25178372.6
(22) Date of filing: 22.05.2025
(51) Int. Cl.: A44B 11/12, B60J 7/10

(54) **TAMPERPROOF CURTAIN BUCKLE**
MANIPULATIONSSICHERE VORHANGSCHNALLE
BOUCLE DE RIDEAU INVIOLABLE

(30) Priority: 04.06.2024 GB 202407898
(43) Date of publication of application: 10.12.2025
(73) Proprietor: Secor Group Ltd, Oldham, OL9 8RL (GB)
(72) Inventor: HOLT, Stephen, Chadderton Oldham OL9 8RL (GB)
(74) Representative: HGF

(56) References cited:
- EP-A1- 2 789 485
- DE-U1- 202013 000 298
- US-A1- 2007 240 286
- US-A1- 2020 101 824

## Description

### TECHNICAL FIELD

The present invention relates to buckles for vertical load restraint straps on the curtains of trucks and trailers, such as on their external side curtains.

### BACKGROUND

Curtain sided trucks and trailers commonly use vertical load restraint straps to vertically tension the side curtains. Each restraint strap has a hook (e.g. "rave hook") at one end, which hooks into a channel in the truck bed, beneath the curtain, and the opposite end of the strap threads through and is releasably locked by a buckle that is commonly mounted on the curtain. The buckles are spaced apart from each other along the length of each curtain, close to the bottom of the curtain. The buckles may be bolted onto the curtain, for example being bolted onto webbing extending up from the buckle. Alternatively, the buckles may be mounted to the curtain by webbing loops.

Loads transported by lorries are commonly sealed into the vehicle or a transported container to prevent tampering during transport. In particular, under the TIR Convention (Transports Internationaux Routiers), lorry loads are sealed for transport between customs offices in different countries. The loads may be secured by a TIR security cable threaded through the curtain buckles that hold taught the vertical load restraint straps on the side curtains, to prevent the buckles from being opened.

Document US 2007/240286 discloses a buckle.

There remains a need for improved curtain buckles for use in securing vehicle curtain straps, e.g. buckles for straps used on vehicle external side curtains.

### SUMMARY OF THE DISCLOSURE

According to the present disclosure, there is provided a tamperproof curtain buckle as set forth in the appended claims.

According to a first aspect, there is provided a tamperproof curtain buckle for releasably securing to a strap, comprising:
a buckle body for securing to a vehicle curtain; and
a buckle lever for moving between a closed position for securing the buckle to a strap and an open position for releasing the buckle from the strap, and the lever has a length L extending perpendicularly from a pivot axis P to a free end of the lever,

wherein the body has a base and a pair of side walls extending from the base and the lever extends between and is pivotally engaged with the side walls for rotation about the pivot axis P;
wherein each side wall is provided with a security aperture for receiving a securing device passing directly between the security apertures to prevent the lever from moving from the closed position to the open position;
wherein the lever has an exposed face that faces away from the base in the closed position, and the exposed face has a recess extending across the lever from adjacent one side wall to adjacent the other side wall for the securing device to extend through, in use; and
a strap threading slot extending parallel with the pivot axis P is provided in the recess and extends through the lever.

According to a second aspect, there is provided a buckle assembly comprising:
a buckle of any preceding claim;
a hook;
a strap for threading through the buckle, the strap being connected to the hook; and
a curtain securing plate for connecting the buckle to a vehicle curtain.

According to a vehicle comprising a vehicle curtain comprising a plurality of buckle assemblies according to the second aspect.

The body and the lever may be configured to enable the securing device to remain visible between the side walls, in use, when the buckle is in the closed position.

The body and the lever may be formed from a composite material having a polyamide matrix and 20% to 50% by weight of filler.

The composite material may have between 25% and 35% by weight of filler.

The filler may be a glass fibre filler.

The filler may be a glass bead filler.

The body and the lever may be formed from a material having a tensile modulus of at least 2,000 MPa, e.g. at least 4,000 MPa.

Adjacent each end of the strap threading slot the lever may have: a thickness of at least 4 mm parallel to the pivot axis P; a depth of at least 6 mm perpendicular to the pivot axis P and perpendicular to the length L of the lever; a cross-sectional area of at least 35 mm² in a plane perpendicular to the length L of the lever; and the recessed strap threading slot has a slot width, in a direction parallel to the length L of the lever, of up to 24 mm. The recessed strap threading slot has a slot width, in a direction parallel to the length L of the lever, of up to 18 mm.

In the closed position of the lever, the security aperture may be located adjacent the lever at 25% to 75% of the length L of the lever.

### DESCRIPTION OF THE DRAWINGS

Examples are further described hereinafter with reference to the accompanying drawings, in which:
- Figures 1A shows a perspective views of a buckle in a closed configuration, threaded with a security cable;
- Figure 1B shows a perspective view of the buckle of Figure 1A in an open configuration;
- Figures 2A, 2B and 2C show plan, side and end views of the buckle of Figure 1A;
- Figures 2D and 2E show perspective views of the buckle of Figure 1A in closed and open configurations;
- Figure 3A shows a perspective view of the buckle of Figure 1A in an open configuration, threaded with a strap;
- Figure 3B shows a perspective view of the buckle of Figure 1A in a closed configuration, threaded with a strap and a security cable;
- Figures 3C and 3D show side and plan views of a buckle assembly comprising the buckle of Figure 1A; and
- Figure 3E show a side view of part of the buckle of Figure 1A and a curtain securing plate; and
- Figure 3F shows an enlarged view of the curtain securing plate.

### DETAILED DESCRIPTION

Like reference numerals refer to like elements throughout.

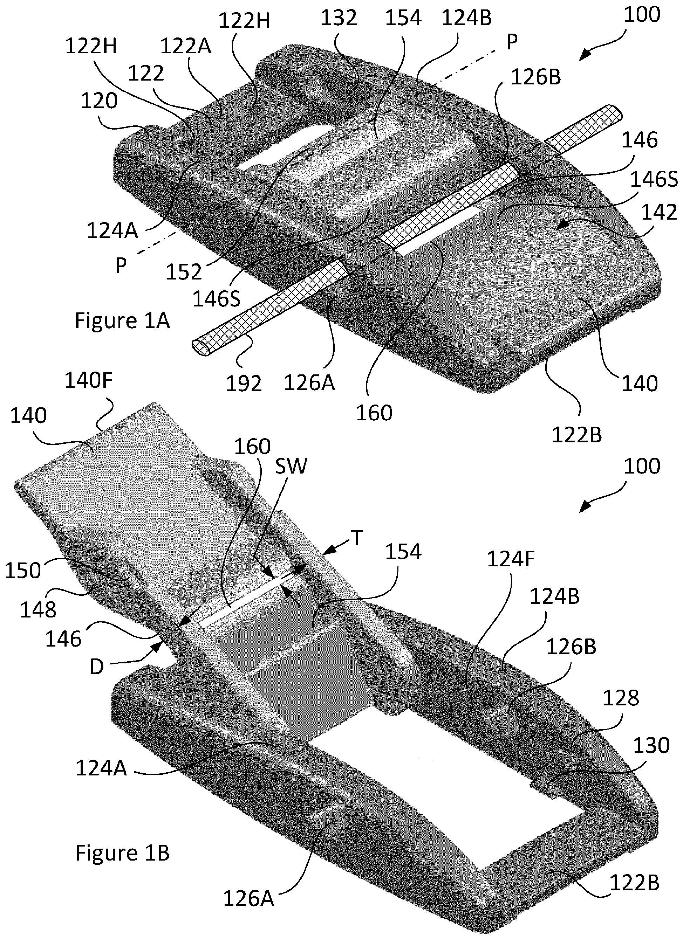

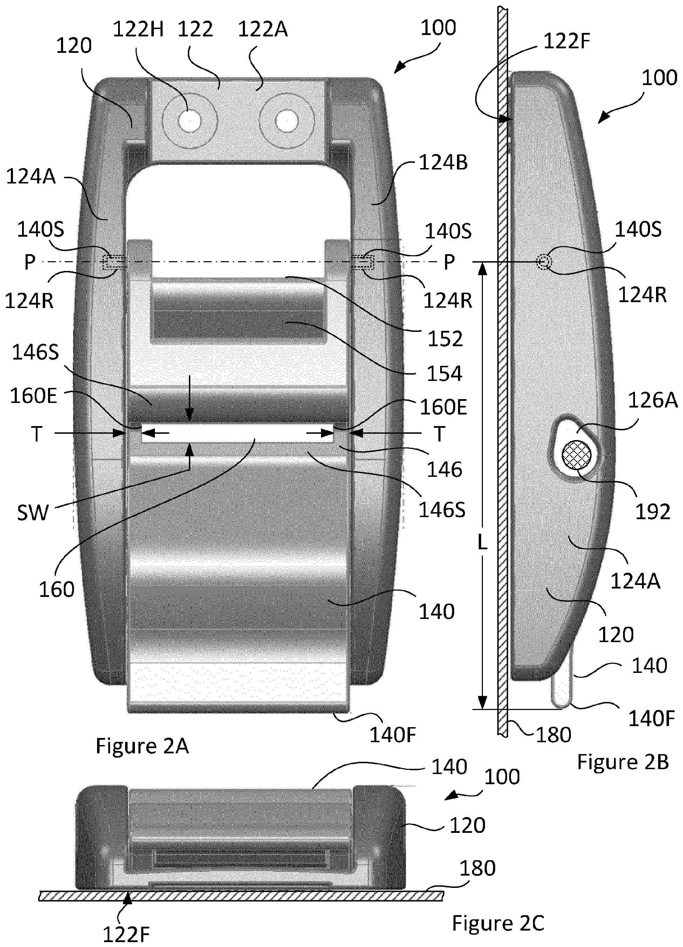

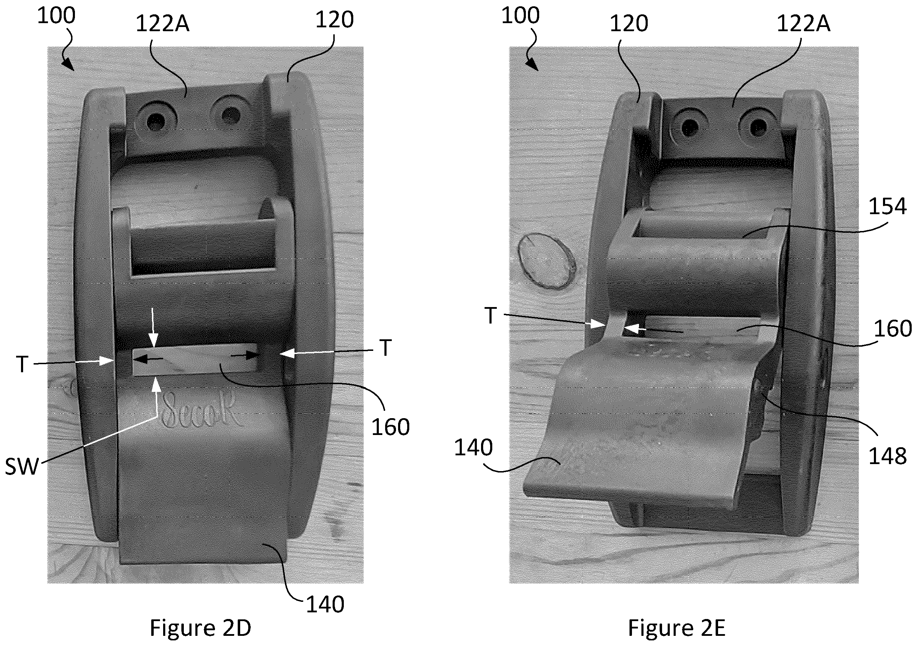

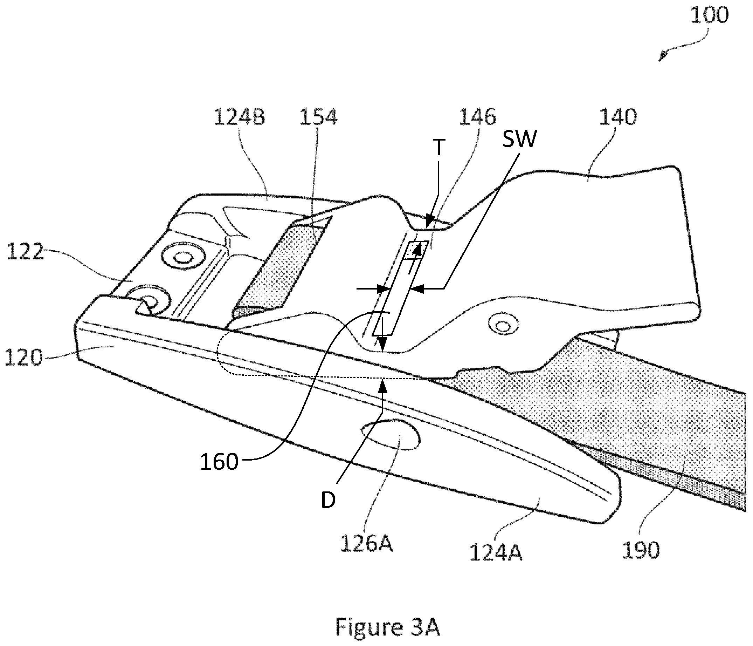

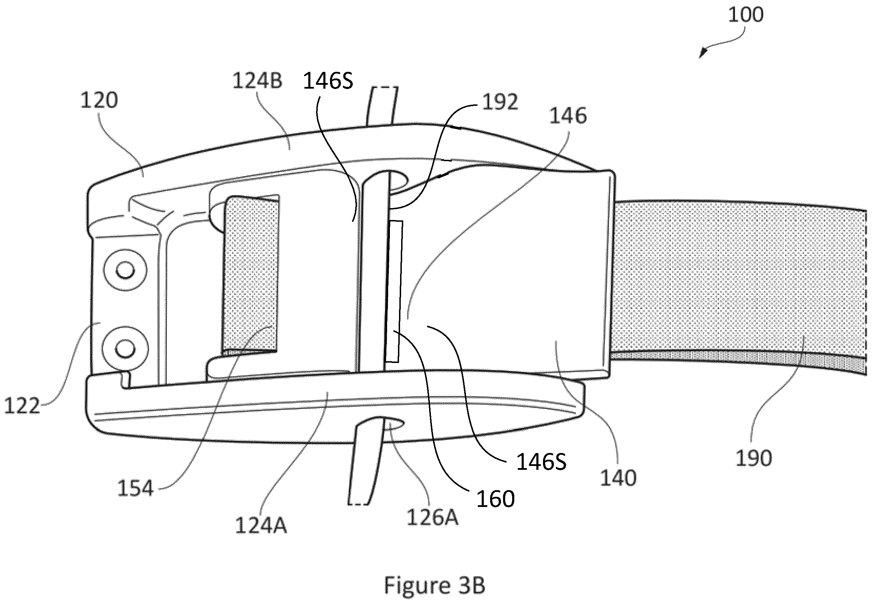

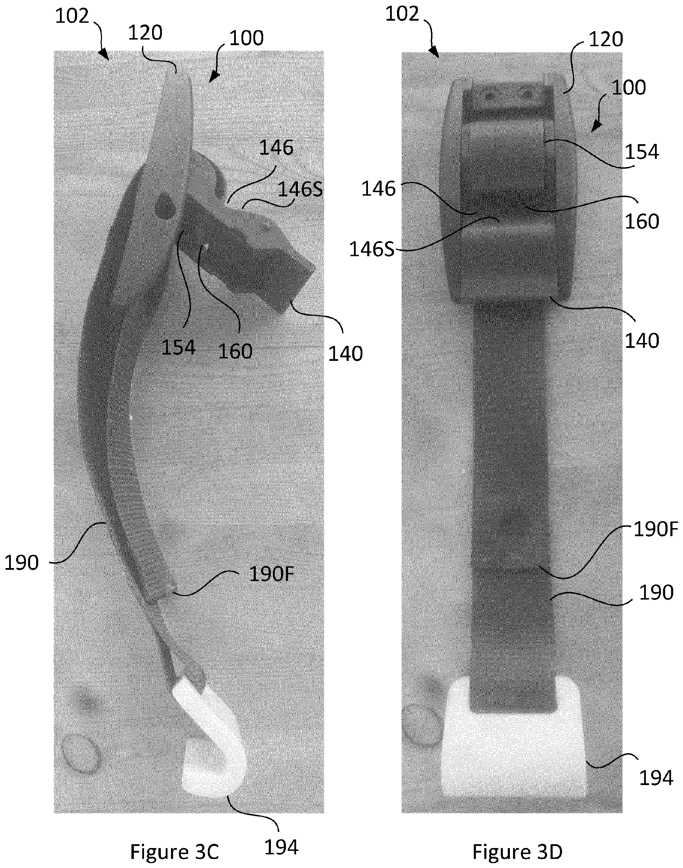

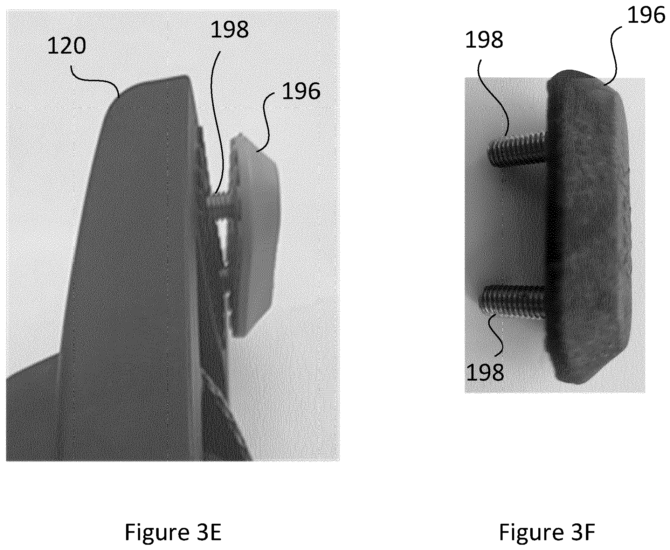

Figures 1A and 1B respectively show a buckle 100, for use with a tension strap on a curtain of a vehicle, e.g. on an external side curtain of a vehicle, in a closed position (closed configuration) and an open position (open configuration). Figures 2A, 2B and 2C show plan, side and end views of the buckle 100, Figures 2D and 2E show perspective views of the buckle of Figure 1A in closed and open configurations, Figures 3A and 3B show perspective views of the buckle threaded with a strap, in an open configuration and a closed configuration, Figures 3C and 3D show side and plan views of a buckle assembly comprising the buckle, Figure 3E show a side view of part of the buckle of Figure 1A and a curtain securing plate, and Figure 3F shows an enlarged view of the curtain securing plate.

The buckle 100 has a body 120 and a lever 140 that is pivotally connected to the body, for pivoting about pivot axis P.

The body 120 has a base 122 and opposed side walls 124A, 124B projecting from the base away from the back face 122F of the base 122. The illustrated body 120 is shaped as an open a frame and the base 122 is provided by end sections 122A, 122B, each extending between ends of the side walls 124A, 124B.

In use, the base 122 is secured to a vehicle curtain 180 (e.g. an external side curtain) with bolts passing through bolt holes 122H in an end section 122A of the base and engaging with a curtain securing plate 196 (a threaded backing plate) behind the curtain 180 (shown in Figures 2B and 2C), or mechanically engaging with the curtain itself, with the back face 122F facing towards the curtain, in use. For example, the base 122 may be secured to webbing integrated into the curtain 180. Alternatively, the base may be suspended on a loop of strap secured to the curtain, for example with the strap looping around an end section of the base.

The lever 140 is pivotally mounted to the inner faces 124F of the opposed side walls 124A, 124B, for rotation about a pivot axis P, and having a length L extending perpendicularly from the pivot axis P to the free end 140F of the lever. The illustrated lever 140 has spigots 140S projecting from opposed edges of the lever that are received into holes 124R in the inner faces 124F of the opposed side walls 124A, 124B. Alternatively, the inner faces of the opposed side walls may be provided with inwardly projecting spigots that are received into holes in the opposed outer edges of the lever.

The body 120 and lever 140 may be formed from injection moulded plastics. The spigots 140S may be inserted into the holes 124R whilst one or both of the body 120 and lever 140 are still warm and soft from forming by injection moulding. To assist the insertion of the spigots 140S into the holes 124R, the inner faces 124F of the opposed side walls 124A, 124B are provided with slipways 132 for leading the spigots to the holes during assembly.

The opposed side walls 124A, 124B are each provided with a security aperture 126A, 126B for receiving a security cable 192 in use. The security apertures 126A, 126B are positioned to enable a security cable 192 (e.g. a TIR security cable) to pass through the security apertures and over the exposed face 142 of the lever 140, substantially parallel with the pivot axis P of the lever, when the lever is in the closed position (e.g. as shown in Figure 1A), i.e. the security apertures extend to a greater distance from the back face 122F of the base 122 than the lever does, adjacent the security apertures.

The exposed face 142 of the lever 140 is provided with a recess 146 extending across the width of the lever (parallel with the pivot axis P) from adjacent one side wall 124A to adjacent the other side wall 124B, for a security cable 192 (e.g. a TIR security cable) to extend through, as the cable extends directly between the security apertures 126A, 126B. The provision of the recess 146 in the exposed face 142 of the lever 140 reduces the exposure of the security cable 192, hindering interference with the buckle 100 and security cable assembly in use. The recess 146 also reduces the exposure of the security cable 192 and opposed side walls 124A, 124B to causes of snagging (e.g. roadside tree branches), providing a smoother outer finish to the closed buckle 100, in use. The sides 146S of the recess 146 in the exposed face 142 of the lever 140 protect the security cable 192 passing across the width of the lever, along the recess.

A recessed strap threading slot 160 is provided within the recess 146, extending through the lever 140. The provision of the recessed strap threading slot 160 increases frictional contact between the strap 190 and the lever 140 by extending the strap across the side 146S of the recess 146 closer to the pivot axis P, enhancing locking performance.

A further strap threading slot 154 is provided through the lever 140 between the recessed strap threading slot 160 and the pivot axis P. The strap threading slots 160, 154 are for threading a vertical restraint strap 190 through, and each extends parallel to the pivot axis P.

The body 120 and lever 140 may be formed from a composite material having a polyamide matrix and 20 %wt (% by weight) to 50 %wt of filler, e.g. having 25 %wt to 35 %wt of filler. The filler may be glass fibre filler. Alternatively the filler may be glass bead filler. The 20 %wt to 50 %wt of glass fibre filler or glass bead filler reinforces the polyamide matrix, resisting disassembly of the buckle 100 in use and if subject to an attack seeking to separate the body 120 and lever 140. Having at least 25 %wt glass fibre filler or glass bead filler provides enhanced strength. Having less than 35 %wt glass fibre filler or glass bead filler provides flexibility to enable the side walls 124A, 124B to flex during engagement of the lever 140 into the closed configuration. The polyamide matrix may be Resin ID (ISO 1043): PA6-GF30.

The body 120 and lever 140 are formed from a material having a tensile modulus of at least 2,000 MPa (e.g. at least 4,000 MPa), as measured in accordance with ISO 527-2. Having a tensile modulus of at least 2,000 MPa provides a strong material that resists disassembly of the buckle 100 in use or deformation of the side walls 124A, 124B to enable a security cable 192 to be drawn between the side walls and the adjacent sides of the lever 140.

Adjacent each end 160E of the recessed strap threading slot 160, the lever 140 has a thickness T of at least 4 mm parallel to the pivot axis P, a depth D of at least 6 mm, and a cross-sectional area (e.g. T x D) of at least 35 mm² in a plane perpendicular to the length L of the lever 140. The recessed strap threading slot 160 has a slot width SW, in a direction parallel to the length L of the lever 140, of up to 24 mm (e.g. up to 18 mm).

Having a thickness T of at least 4 mm, a depth D of at least 6 mm, a cross-sectional area of at least 24 mm², and a slot width SW of up to 18 mm provides a lever 140 (e.g. formed from the composite material described below) that resists deformation under a hostile attack, e.g. resisting buckling inwardly at the sides, resisting warping by twisting the free end 140F of the lever 140 about the length L of the lever 140, and resisting folding deformation of the lever about the recessed strap threading slot 160 in the recess 146.

The illustrated body 120 and lever 140 are formed from a polyamide matrix and 30% by weight of glass fibre filler, having a tensile modulus of 6,000 MPa (ISO 527-2), and adjacent each end 160E of the recessed strap threading slot 160, the lever 140 has a thickness T of 7 mm parallel to the pivot axis P, a depth D of 10 mm, a cross-sectional area (e.g. T x D) of 70 mm², and a slot width SW of 12 mm.

In use, as shown in Figures 3C and 3D, for securing a vertical restraint strap 190, the free end 190F of the strap 190 is threaded from the opposed end of the strap (e.g. the end having the hook 194), underneath the lever 140, around the back 152 of the lever to the exposed face 142, through the recessed strap threading slot 160, back through the further strap threading slot 154, and back around the back 152 of the lever, underneath the previously described portion of strap, when the lever is in the open position. Then, the lever 140 is moved (pivoted about the pivot axis P) to the closed position, to lock the strap 190 in place within the buckle 100 (e.g. being held by self-locking friction between the two layers of strap passing around the back 152 of the lever 140.

Once the strap 190 has been locked in place within the buckle 100, a security cable 192 may then be threaded through and between the security apertures 126A, 126B, passing through the recess 146, to prevent the lever 140 from being returned to the open position, without unlocking the strap 190 from the buckle 100. To release the strap 190, it is necessary to remove the security cable 192 before the lever 140 can be moved from the closed position to the open position.

In use, the body 120 is secured to a curtain 180 (e.g. a side curtain) of a truck or trailer (or other vehicle), and in the closed position, the exposed face 142 of the lever 140 faces away from the curtain 180. The buckle 100 is secured to the curtain 180 with a curtain securing plate 196, e.g. by threaded bolts 198 being received through apertures in the curtain 180 and bolt holes 122H in the base 120, and secured using threaded nuts (not shown).

In use, when the buckle 100 is locked onto the vertical load restraint strap 190 and secured with a security cable 192, the cable passing through the buckle is clearly visible. If the lever 140 or body 120 of the buckle or the security cable should be tampered with, to unlock the buckle and release the strap 190, this could be easily detected by visual inspection of the buckle, e.g. by security or customs inspectors:
- In use, the security cable 192 passes over the exposed face 142 of the lever 140 (e.g. passing along open recess 146), when the lever is in the closed position. Aside from when passing through the side walls 124A, 124B, the security cable 192 remains visible to external inspection, to enable the detection of tampering with the security cable. In the event that the security cable 192 should be cut, the cut ends of the security cable could not subsequently be hidden behind the lever 140, when the lever is in the closed position.
- If the free end 140F of the lever 140 should be broken-off, to enable the residual stub of the lever to be pivoted from the closed position to the open position, without cutting or otherwise removing the security cable 192, to release the vertical load restraint strap 190, the broken lever would be apparent by visual inspection.
- If the tops of the opposed side walls 124A, 124B should be cut-through, down to the security apertures 126A, 126B, to enable the release of the uncut security cable 192 from the buckle 100, to enable the lever 140 to be opened to unlock the vertical load restraint strap 190, the cut side walls would be apparent by visual inspection.

The invention has been described in relation to the use of a security cable. However, alternatively, a padlock or other locking mechanism may be secured through one or each of the security apertures 126A, 126B, to prevent the lever 140 from being moved (pivoted) from the closed position to the open position, to unlock the strap 190 from the buckle 100.

The lever 140 has a length (L) extending perpendicularly from the pivot axis P of the pivotal mounting to the free end 140F of the lever. The security apertures 126A, 126B are located adjacent the lever 140 at 25% to 75% of the length of the lever, when the lever is in the closed position. Being located at 25% or more of the length of the lever 140 from the pivot axis P of the pivotal mounting ensures that the lever 140 may not be raised by a significant degree before being stopped by the overlying security cable 192, preventing the locking of the strap 190 by the buckle 100 from being released. Being located at 75% of the length of the lever or less from the pivot axis P of the pivotal mounting prevents the security cable 192 from being pulled over the free end 140F of the lever 140, when the security cable 192 has been locked taut along the curtain of the vehicle or trailer.

The inner faces 124F of the opposed side walls 124A, 124B may be provided with frictional engagement dimples 128 for receiving complementary frictional engagement bumps 148, to releasably retain the lever 140 in the closed position.

The buckle 100 may be arranged for the lever 140 to receive the strap 190 in an over-centre manner, so that in use, tension on the strap acts to retain the lever in the closed position. Alternatively, or additionally, one or both of biasing elements or locking elements may be provided to retain the closed lever in the closed position.

The base 120 is provided with stops 130 that limit the travel of the lever 140 when pivoted into the closed position, e.g. engaging in rebates 150 in the lever, and may be arranged to provide a friction fit to enable the lever to be releasably clipped into the closed position.

As shown in Figures 3C and 3D, the buckle 100 may be pre-assembled as a buckle assembly 102 having a hook 194 secured on a strap 190 for threading through the buckle 100 (or pre-threaded through the buckle), and provided with a curtain securing plate 196 (which may be temporarily pre-assembled to the base 120, or provided separately, forming a kit of parts).

The invention is defined by the claims and is not restricted to the details of any foregoing embodiments.

## Claims

1. A tamperproof curtain buckle (100) for releasably securing to a strap (190), comprising:
a buckle body (120) for securing to a vehicle curtain; and
a buckle lever (140) for moving between a closed position for securing the buckle (100) to a strap and an open position for releasing the buckle (100) from the strap, and the lever (140) has a length (L) extending perpendicularly from a pivot axis (P) to a free end (140F) of the lever (140),
wherein the body (120) has a base (122) and a pair of side walls (124A, 124B) extending from the base (122) and the lever (140) extends between and is pivotally engaged with the side walls (124A, 124B) for rotation about the pivot axis (P);
wherein each side wall (124A, 124B) is provided with a security aperture (126A, 126B) for receiving a securing device (192) passing directly between the security apertures to prevent the lever (140) from moving from the closed position to the open position;
wherein the lever (140) has an exposed face (142) that faces away from the base (122) in the closed position, and the exposed face has a recess (146) extending across the lever from adjacent one side wall (124A) to adjacent the other side wall (124B) for the securing device (192) to extend through, in use; and
a strap threading slot (160) extending parallel with the pivot axis (P) is provided in the recess (146) and extends through the lever (140).

2. The buckle of claim 1, wherein the body (120) and the lever (140) are configured to enable the securing device (192) to remain visible between the side walls (124A, 124B), in use, when the buckle (100) is in the closed position.

3. The buckle of claim 1 or claim 2, wherein the body (120) and the lever (140) are formed from a composite material having a polyamide matrix and 20% to 50% by weight of filler.

4. The buckle of claim 3, wherein the composite material having between 25% and 35% by weight of filler.

5. The buckle of claim 3 or claim 4, wherein the filler is glass fibre filler.

6. The buckle of claim 3 or claim 4, wherein the filler is glass bead filler.

7. The buckle according to any preceding claim, wherein the body (120) and the lever (140) are formed from a material having a tensile modulus of at least 2,000 MPa.

8. The buckle according to any preceding claim, wherein adjacent each end (160E) of the strap threading slot (160) the lever (140) has: a thickness (T) of at least 4 mm parallel to the pivot axis (P); a depth (D) of at least 6 mm perpendicular to the pivot axis (P) and perpendicular to the length (L) of the lever (140); a cross-sectional area of at least 35 mm² in a plane perpendicular to the length (L) of the lever (140); and the recessed strap threading slot 160 has a slot width (SW), in a direction parallel to the length (L) of the lever 140, of up to 24 mm.

9. **The** buckle of any preceding claim, wherein in the closed position of the lever (140), the security aperture (126A, 126B) is located adjacent the lever at 25% to 75% of the length (L) of the lever (140).

10. A buckle assembly comprising:
a buckle (100) of any preceding claim;
a hook (194);
a strap (190) for threading through the buckle (100), the strap being connected to the hook (194); and
a curtain securing plate (196) for connecting the buckle (100) to a vehicle curtain (180).

11. A vehicle comprising a vehicle curtain comprising a plurality of buckle assemblies according to claim 10.

## Patentansprüche

1. Manipulationssichere Vorhangschnalle (100) zum lösbaren Befestigen an einem Riemen (190), umfassend:
einen Schnallenkörper (120) zum Befestigen an einem Fahrzeugvorhang; und
einen Schnallenhebel (140) zum Bewegen zwischen einer geschlossenen Position zum Befestigen der Schnalle (100) an einem Riemen und einer offenen Position zum Lösen der Schnalle (100) von dem Riemen, und wobei der Hebel (140) eine Länge (L) aufweist, die sich senkrecht von einer Schwenkachse (P) zu einem freien Ende (140F) des Hebels (140) erstreckt,
wobei der Körper (120) eine Basis (122) und ein Paar Seitenwände (124A, 124B), die sich von der Basis (122) erstrecken, aufweist und sich der Hebel (140) zwischen den Seitenwänden (124A, 124B) erstreckt und schwenkbar mit diesen in Eingriff steht, um sich um die Schwenkachse (P) zu drehen;
wobei jede Seitenwand (124A, 124B) mit einer Sicherheitsöffnung (126A, 126B) zum Aufnehmen einer Befestigungsvorrichtung (192) versehen ist, die direkt zwischen den Sicherheitsöffnungen verläuft, um zu verhindern, dass sich der Hebel (140) von der geschlossenen Position in die offene Position bewegt;
wobei der Hebel (140) eine freiliegende Fläche (142) aufweist, die in der geschlossenen Position von der Basis (122) weg weist, und die freiliegende Fläche eine Aussparung (146) aufweist, die sich von benachbart zu einer Seitenwand (124A) zu benachbart zu der anderen Seitenwand (124B) über den Hebel erstreckt, damit sich die Befestigungsvorrichtung (192) im Gebrauch dadurch erstreckt; und
wobei ein Riemeneinfädelschlitz (160), der sich parallel zu der Schwenkachse (P) erstreckt, in der Aussparung (146) bereitgestellt ist und sich durch den Hebel (140) erstreckt.

2. Schnalle nach Anspruch 1, wobei der Körper (120) und der Hebel (140) dazu konfiguriert sind, zu ermöglichen, dass die Befestigungsvorrichtung (192) im Gebrauch zwischen den Seitenwänden (124A, 124B) sichtbar bleibt, wenn sich die Schnalle (100) in der geschlossenen Position befindet.

3. Schnalle nach Anspruch 1 oder Anspruch 2, wobei der Körper (120) und der Hebel (140) aus einem Verbundmaterial gebildet sind, das eine Polyamidmatrix und 20 Gew.-% bis 50 Gew.-% Füllstoff aufweist.

4. Schnalle nach Anspruch 3, wobei das Verbundmaterial zwischen 25 Gew.-% und 35 Gew.-% Füllstoff aufweist.

5. Schnalle nach Anspruch 3 oder Anspruch 4, wobei der Füllstoff Glasfaserfüllstoff ist.

6. Schnalle nach Anspruch 3 oder Anspruch 4, wobei der Füllstoff Glasperlenfüllstoff ist.

7. Schnalle gemäß einem vorhergehenden Anspruch, wobei der Körper (120) und der Hebel (140) aus einem Material gebildet sind, das einen Zugmodul von mindestens 2.000 MPa aufweist.

8. Schnalle gemäß einem vorhergehenden Anspruch, wobei der Hebel (140) benachbart zu jedem Ende (160E) des Riemeneinfädelschlitzes (160) Folgendes aufweist: eine Dicke (T) von mindestens 4 mm parallel zu der Schwenkachse (P); eine Tiefe (D) von mindestens 6 mm senkrecht zu der Schwenkachse (P) und senkrecht zu der Länge (L) des Hebels (140); eine Querschnittsfläche von mindestens 35 mm² in einer Ebene senkrecht zu der Länge (L) des Hebels (140); und wobei der ausgesparte Riemeneinfädelschlitz 160 eine Schlitzbreite (SW) in einer Richtung parallel zu der Länge (L) des Hebels 140 von bis zu 24 mm aufweist.

9. Schnalle nach einem vorhergehenden Anspruch, wobei in der geschlossenen Position des Hebels (140) sich die Sicherheitsöffnung (126A, 126B) benachbart zu dem Hebel bei 25 % bis 75 % der Länge (L) des Hebels (140) befindet.

10. Schnallenanordnung, umfassend:
eine Schnalle (100) nach einem vorhergehenden Anspruch;
einen Haken (194);
einen Riemen (190) zum Einfädeln durch die Schnalle (100), wobei der Riemen mit dem Haken (194) verbunden ist; und
eine Vorhangbefestigungsplatte (196) zum Verbinden der Schnalle (100) mit einem Fahrzeugvorhang (180).

11. Fahrzeug, umfassend einen Fahrzeugvorhang, der eine Vielzahl von Schnallenanordnungen gemäß Anspruch 10 umfasst.

## Revendications

1. Boucle de rideau inviolable (100) destinée à être fixée de manière libérable à une sangle (190), comprenant :
un corps de boucle (120) destiné à être fixé à un rideau de véhicule ; et
un levier de boucle (140) destiné à se déplacer entre une position fermée pour la fixation de la boucle (100) à une sangle et une position ouverte pour la libération de la boucle (100) de la sangle, et le levier (140) a une longueur (L) s'étendant perpendiculairement depuis un axe de pivotement (P) jusqu'à une extrémité libre (140F) du levier (140),
dans laquelle le corps (120) a une base (122) et une paire de parois latérales (124A, 124B) s'étendant à partir de la base (122) et le levier (140) s'étend entre et est mis en prise de manière pivotante avec les parois latérales (124A, 124B) pour tourner autour de l'axe de pivotement (P) ;
dans laquelle chaque paroi latérale (124A, 124B) est pourvue d'une ouverture de sécurité (126A, 126B) destinée à recevoir un dispositif de fixation (192) passant directement entre les ouvertures de sécurité afin d'empêcher le levier (140) de se déplacer de la position fermée à la position ouverte ;
dans laquelle le levier (140) a une face exposée (142) qui est orientée à l'opposé de la base (122) dans la position fermée, et la face exposée a un évidement (146) s'étendant en travers du levier depuis une zone adjacente à une paroi latérale (124A) jusqu'à une zone adjacente à l'autre paroi latérale (124B) pour permettre au dispositif de fixation (192) de le traverser, en cours d'utilisation ; et
une fente d'insertion de sangle (160) s'étendant parallèlement à l'axe de pivotement (P) est prévue dans l'évidement (146) et traverse le levier (140).

2. Boucle selon la revendication 1, dans laquelle le corps (120) et le levier (140) sont configurés pour permettre au dispositif de fixation (192) de rester visible entre les parois latérales (124A, 124B), en cours d'utilisation, lorsque la boucle (100) est dans la position fermée.

3. Boucle selon la revendication 1 ou la revendication 2, dans laquelle le corps (120) et le levier (140) sont formés à partir d'un matériau composite ayant une matrice en polyamide et 20 % à 50 % en poids de charge.

4. Boucle selon la revendication 3, dans laquelle le matériau composite contient entre 25 % et 35 % en poids de charge.

5. Boucle selon la revendication 3 ou la revendication 4, dans laquelle la charge est une charge de fibres de verre.

6. Boucle selon la revendication 3 ou la revendication 4, dans laquelle la charge étant une charge de billes de verre.

7. Boucle selon l'une quelconque des revendications précédentes, dans laquelle le corps (120) et le levier (140) sont formés à partir d'un matériau ayant un module de traction d'au moins 2000 MPa.

8. Boucle selon l'une quelconque des revendications précédentes, dans laquelle, dans une zone adjacente à chaque extrémité (160E) de la fente d'insertion de sangle (160), le levier (140) a : une épaisseur (T) d'au moins 4 mm parallèle à l'axe de pivotement (P) ; une profondeur (D) d'au moins 6 mm perpendiculaire à l'axe de pivotement (P) et perpendiculaire à la longueur (L) du levier (140) ; une surface de section transversale d'au moins 35 mm² dans un plan perpendiculaire à la longueur (L) du levier (140) ; et la fente d'insertion de sangle évidée 160 a une largeur de fente (SW), dans une direction parallèle à la longueur (L) du levier 140, allant jusqu'à 24 mm.

9. Boucle selon l'une quelconque des revendications précédentes, dans laquelle, dans la position fermée du levier (140), l'ouverture de sécurité (126A, 126B) est située adjacente au levier à 25 % à 75 % de la longueur (L) du levier (140).

10. Ensemble boucle, comprenant :
une boucle (100) selon l'une quelconque des revendications précédentes ;
un crochet (194) ;
une sangle (190) destinée à être insérée à travers la boucle (100), la sangle étant raccordée au crochet (194) ; et
une plaque de fixation de rideau (196) destinée à raccorder la boucle (100) à un rideau de véhicule (180).

11. Véhicule comprenant un rideau de véhicule comprenant une pluralité d'ensembles boucle selon la revendication 10.
